# EUROPEAN PATENT SPECIFICATION

(11) **EP 1 418 822 B1**
(45) Date of publication and mention of the grant of the patent: **30.03.2005**
(21) Application number: 02772150.5
(22) Date of filing: 14.08.2002
(51) Int. Cl.: A23L 1/303, A23L 1/305, A23L 1/275

(54) **NOVEL STABILIZED CAROTENOID COMPOSITIONS**
NEUARTIGE, STABILISIERTE CAROTENOID-MISCHUNGEN
NOUVELLES COMPOSITIONS STABILISEES DE CAROTENOIDES

(30) Priority: 23.08.2001 EP 01120203
(43) Date of publication of application: 19.05.2004
(73) Proprietor: DSM IP Assets B.V., 6411 TE Heerlen (NL)
(72) Inventor: LEUENBERGER, Bruno, CH-4123 Allschwil (CH)
(74) Representative: Teipel, Stephan, Dr.
(86) International application number: PCT/EP2002/009096
(87) International publication number: WO 2003/017785

(56) References cited:
- EP-B- 0 410 236
- US-A- 5 126 328
- US-A- 5 356 636
- CORTESI R ET AL: "Sugar cross-linked gelatin for controlled release: microspheres and disks" BIOMATERIALS, ELSEVIER SCIENCE PUBLISHERS BV., BARKING, GB, vol. 19, no. 18, September 1998 (1998-09), pages 1641-1649, XP004161435 ISSN: 0142-9612

## Description

The present invention relates to novel stabilized carotenoid compositions. More particularly, the present invention relates to compositions comprising a carotenoid and/or fat-soluble vitamin in a matrix of a protein which is cross-linked with a reducing substance, a solid vegetable fat and, optionally, auxiliary agents.

The invention further relates to a process for the preparation of the novel compositions; to the use of these compositions as additives, particularly as functional health ingredients for food, particularly vegetable fats; and to food, particularly vegetable fats containing a novel composition of this invention.

Carotenoid compositions are known from the prior art. US-A-535636 discloses vitamin/carotenoid products in powder form, embedded in a gelatin-based matrix. Further, EP-B-0410236 discloses aprocess for the preparation of carotinoid compositions in an oil matrix.

The term "functional health ingredient" refers to additives for food which supplement or improve the nutritional value of food, such as vitaminizing compositions.

The term "carotenoid" as used herein comprises a natural or synthetic carotene or structurally related polyene compound which can be used as a functional health ingredient or colorant for food, such as α- or β-carotene, 8'-apo-β-carotenal, 8'-apo-β-carotenoic acid esters such as the ethyl ester, canthaxanthin, astaxanthin, lycopene, lutein, zeaxanthin or crocetin, or mixtures thereof. The preferred carotenoids are β-carotene, lycopene and lutein and mixtures thereof, especially β-carotene. The amount of carotenoid and/or fat-soluble vitamin in the compositions of the present invention may be from about 0.1 to about 30 wt.-%, and preferably is from about 1 to about 10 wt.-%.

The protein is preferably gelatin, which may be bovine, swine or fish gelatin or hydrolyzed gelatin. Any gelatin which has a bloom number in the range of practically 0 to about 300, particularly of about 50 to about 250 can be employed in the practive of this invention. Both Type A and Type B can be employed. The amount of protein in the compositions of the present invention may be from about 5 to about 80 wt.-%, and preferably is from about 10 to about 40 wt.-%.

The reducing substance is preferably a reducing sugar such as fructose, glucose, lactose, maltose, xylose, arabinose, ribose, invert sugar or high fructose or glucose syrups. Also, aldehydes such as glutar aldehyde may be used as the reducing substance.

The amount of reducing substances in the compositions of the present invention may be from about 5 to about 50 wt.-%, and preferably is from about 10 to about 35 wt.-%.

The vegetable fat should be solid at room temperature (20-25 °C). Examples of such fats are plant fats and hardened (i.e. hydrogenated) plant oils such as hardened sunflower oil (also referred to as sunflower fat) and hardened rape oil. Further examples of vegetable fats for use in the present invention are hardened ricinus oil, hardened cotton seed oil, cocos fat and palm fat.

The amount of solid vegetable fat in the compositions of the present invention may be from about 2 to about 30 wt.-%, and preferably is from about 5 to about 20 wt.-%.

Fat-soluble vitamins which may be present in the compositions of the present invention are vitamin A, D, E and K. These vitamins may be present singly or in any desired combination, or in combination with a carotenoid as defined above. In a preferred aspect the present invention relates to compositions comprising a carotenoid in a matrix of a protein which is cross-linked with a reducing substance, a solid vegetable fat and, optionally, auxiliary agents.

The compositions of the present invention may include further ingredients, e.g. auxiliary agents such as anti-oxidants, emulsifiers, humectants, extenders, solubilizers, and other coloring agents; or nutritionally valuable agents, e.g., water-soluble vitamins such vitamin B₁, B₂, B₆ or C. Examples of antioxidants are butylated hydroxyanisol, butylated hydroxytoluene and ethoxyquin. The emulsifier may be a lecithin. Examples of humectants are glycerol, sorbitol, propylene glycol and polyethylene glycols. Preferably, the compositions of the present invention contain glycerol in an amount of e.g. 5 wt.-% to about 30 wt.-%.

In accordance with the present invention the novel compositions can be prepared by forming an emulsion of an aqueous solution of the protein, the reducing substance and optional water-soluble auxiliary agents with the carotenoid and/or fat-soluble vitamin, the solid vegetable fat and optional fat-soluble auxiliary agents, converting the emulsion into a dry particulate form and submitting the particles to conditions to effect cross-linking of the protein and the reducing substance.

In one embodiment of the process of this invention the protein, e.g., gelatin is dissolved in water, if necessary, by gentle warming and the carotenoid and other fat-soluble ingredients are the dispersed or emulsified in the solution of the protein. The carotenoid and other fat-soluble ingredients may be added as such or dissolved in an appropriate organic solvent, e.g., a chlorinated hydrocarbon such as chloroform. The reducing substance and optional water-soluble ingredients can be introduced into the mixture either before or after adding the carotenoid and other optional fat-soluble ingredients. The mixture is homogenized by conventional techniques such as agitating, high-pressure homogenisation, high-shear emulsification or the like and the resulting emulsion converted into a dry particulate form such as granules or beadlets, by spraying onto a bed of starch. If a solvent has been used to dissolve the carotenoid or optional fat-soluble agents such solvent is suitably be removed from the emulsion by evaporation prior to spray-drying.

The starch used in the process to collect the sprayed emulsion may consist entirely of a powder of starch and/or chemically modified starch. The starch may also contain minor amounts of lubricants or other modifiers such as talc, silicic acid, flours, hydrogenated fats and metal salts of higher fatty acids, e.g., calcium stearate. The starch powder should be substantially insoluble in cold water and be resistant to wetting by water; it should have an appreciable capacity to absorb and/or adsorb water; and it should be free-flowing. Its moisture content should be below about 10 wt.-%. Starch powders of the desired type are e.g. those disclosed in US 2,613,206 and those commercially available as "Dry-Flo" from National Starch Products, Inc., New York. The spraying of the emulsion obtained in accordance with the process of this invention may be carried out by techniques known per se, e.g. as disclosed in US 4,670,247 the contents of which are enclosed herewith for reference purposes. Most preferred is spray-drying in combination with fluidized-bed granulation (commonly known as fluidized spray drying or FSD). The spraying conditions are suitably adjusted (by the size of the spraying nozzle orifice, the percentage of water in the emulsion etc.) so as to produce particles passing a 10 mesh screen and being retained by a 200 mesh screen, preferably particles of a size in the range between 20 and 170 mesh.

The granules or beadlets obtained are then submitted to conditions to effect cross-linking of the protein, e.g., gelatin, and the reducing substance (sugar). The cross-linking may be accomplished by heat-treatment or by treatment with enzymes, e.g., transglutaminase.

Preferably, the cross-linking is accomplished by heat-treatment. In one embodiment of the process of the present invention, the granules or beadlets are heated to about 60 °C to about 100 °C for about 10 to about 60 minutes, e.g. to 80 °C for about 40 minutes. The so-obtained composition represents a powder which is insoluble in boiling water.

The compositions of the present invention may find use particularly as additives to vegetable fats such as margarine where they provide increased stability of the particular ingredient as compared to similar compositions which do not contain a hardened vegetable fat. They may be present, e.g., in vegetable fats in an amount to provide from about 1 to about 2000 ppm of carotenoid.

The following Example illustrates the invention further.

### Example

44 g of gelatin (Bloom 140), 48 g of fructose, 20 g of glycerol and 3 g of ascorbyl palmitate were dissolved in water at 60 °C. The pH was adjusted to 7.6 by the addition of 2.4 ml of 20 % (wt/vol) aqueous sodium hydroxide solution to yield Phase I. 11 g of lutein cake base (75 %, Kemin Foods, Des Moines, Iowa, USA), 4.8 g of lycopene (70%, LycoRed Natural Products Industries Ltd., Israel), 20 g of sunflower fat and 3 g of d,l-α-tocopherol were dissolved in 150 ml of chloroform with heatting to reflux. There was thus obtained phase II. Phase II was slowly emulsified into Phase I at 45 °C using a rotor-stator emulsifier to obtain a particle size of the inner phase of 214 nm. The chloroform was distilled off and the resulting emulsion sprayed into a fluidized starch bed. The so-obtained beadlets were separated by sieving and dried in a fluidized bed. The so-obtained a powder was transferred to a round-bottom flask and heated for 40 minutes in an oil bath of 80 °C in a rotary dryer.

The so-obtained product was incorporated into margarine in carotenoid concentrations of 260 ppm and 2000 ppm. After storage for four weeks at 4 °C the retention of the carotenoids was determined by spectrophotometry and was found to be 100 %.

## Claims

1. Compositions comprising a carotenoid and/or fat-soluble vitamin in a matrix of a protein which is cross-linked with a reducing substance, a solid vegetable fat and, optionally, auxiliary agents.

2. Compositions comprising a carotenoid in a matrix of a protein which is cross-linked with a reducing substance, a solid vegetable fat and, optionally, auxiliary agents.

3. Compositions as in claim 1 or 2 wherein the protein is gelatin.

4. Compositions as in any one of claims 1-3 wherein the reducing substance is a reducing sugar.

5. Compositions as in any one of claims 1-4 wherein the matrix comprises about 5 to about 80 wt.-% of protein, about 5 to about 50 wt.-% of a reducing substance, and about 2 to about 30 wt.-% of a solid vegetable fat.

6. Compositions as in any one of claims 1-5 wherein the matrix comprises about 10 to about 40 wt.-% of protein, about 10 to about 35 wt.-% of a reducing substance, and about 5 to about 20 wt.-% of a solid vegetable fat.

7. Compositions as in any one of claims 1-6 comprising about 0.1 to about 30 wt.-% of a carotenoid and/or fat-soluble vitamin.

8. Compositions as in any one of claims 1-6 comprising about 1 to about 10 wt.-% of a carotenoid and/or fat-soluble vitamin.

9. Compositions as in any one of claims 1-8 wherein the carotenoid α- or β-carotene, 8'-apo-β-carotenal, 8'-apo-β-carotenoic acid esters such as the ethyl ester, canthaxanthin, astaxanthin, lycopene, lutein, zeaxanthin or crocetin, or mixtures thereof.

10. Compositions as in any one of claims 1-9 wherein the carotenoid β-carotene, lutein or lycopene, or mixtures thereof

11. Compositions as in any one of claims 1-10 wherein the carotenoid is β-carotene.

12. Compositions as in any one of claims 1-10 wherein the carotenoid is a mixture of lycopene and lutein.

13. Compositions as in any one of claims 1-12 wherein the vegetable fat is sunflower fat or hardened rape oil.

14. Compositions as in any one of claims 1-12 wherein glycerol is present as an auxiliary agent.

15. Compositions as in claim 1 wherein the fat-soluble vitamin is vitamin A, D ,E or K or mixtures thereof.

16. Process for preparing a composition as claimed in any one of claims 1-15 which comprises forming an emulsion of an aqueous solution of the protein, the reducing substance and optional water-soluble auxiliary agents with the carotenoid and/or fat-soluble vitamin, the solid vegetable fat and optional fat-soluble auxiliary agents, converting the emulsion into a dry particulate form and submitting the particles to conditions to effect cross-linking of the protein and the reducing substance.

17. The use of a composition as claimed in any one of claims 1-15 as an additive for food.

18. The use as in claim 17 wherein the food is a vegetable fat..

19. The use as in claim 17 wherein the food is margarine.

20. Food containing a composition as claimed in any one of claims 1-15.

21. A vegetable fat containing a composition as claimed in any one of claims 1-15.

22. Margarine containing a composition as claimed in any one of claims 1-15.

## Patentansprüche

1. Zusammensetzungen, umfassend ein Carotenoid und/oder fettlösliches Vitamin in einer Matrix eines Proteins, das mit einer reduzierenden Substanz, einem festen Pflanzenfett und gegebenenfalls Hilfsmitteln vernetzt ist.

2. Zusammensetzungen, umfassend ein Carotenoid in einer Matrix eines Proteins, das mit einer reduzierenden Substanz, einem festen Pflanzenfett und gegebenenfalls Hilfsmitteln vernetzt ist.

3. Zusammensetzungen nach Anspruch 1 oder 2, wobei das Protein Gelatine ist.

4. Zusammensetzungen nach einem der Ansprüche 1 bis 3, wobei die reduzierende Substanz ein reduzierender Zucker ist.

5. Zusammensetzungen nach einem der Ansprüche 1 bis 4, wobei die Matrix etwa 5 bis etwa 80 Gew.-% Protein, etwa 5 bis etwa 50 Gew.-% einer reduzierenden Substanz und etwa 2 bis etwa 30 Gew.-% eines festen Pflanzenfettes umfaßt.

6. Zusammensetzungen nach einem der Ansprüche 1 bis 5, wobei die Matrix etwa 10 bis etwa 40 Gew.-% Protein, etwa 10 bis etwa 35 Gew.-% einer reduzierenden Substanz und etwa 5 bis etwa 20 Gew.-% eines festen Pflanzenfettes umfaßt.

7. Zusammensetzungen nach einem der Ansprüche 1 bis 6, umfassend etwa 0,1 bis etwa 30 Gew.-% eines Carotenoids und/oder fettlöslichen Vitamins.

8. Zusammensetzungen nach einem der Ansprüche 1 bis 6, umfassend etwa 1 bis etwa 10 Gew.-% eines Carotenoids und/oder fettlöslichen Vitamins.

9. Zusammensetzungen nach einem der Ansprüche 1 bis 8, wobei das Carotenoid α- oder β-Carotin, 8'-apo-β-Carotenal, 8'-apo-β-Carotenoinsäureester, wie der Ethylester, Canthaxanthin, Astaxanthin, Lycopin, Lutein, Zeaxanthin oder Crocetin, oder Gemische davon ist.

10. Zusammensetzungen nach einem der Ansprüche 1 bis 9, wobei das Carotenoid β-Carotin, Lutein oder Lycopin oder Gemische davon ist.

11. Zusammensetzungen nach einem der Ansprüche 1 bis 10, wobei das Carotenoid β-Carotin ist.

12. Zusammensetzungen nach einem der Ansprüche 1 bis 10, wobei das Carotenoid ein Gemisch aus Lycopin und Lutein ist.

13. Zusammensetzungen nach einem der Ansprüche 1 bis 12, wobei das Pflanzenfett Sonnenblumenfett oder gehärtetes Rapsöl ist.

14. Zusammensetzungen nach einem der Ansprüche 1 bis 12, wobei Glycerol als ein Hilfsmittel vorliegt.

15. Zusammensetzungen nach Anspruch 1, wobei das fettlösliche Vitamin Vitamin A, D, E oder K oder Gemische davon ist.

16. Verfahren zur Herstellung einer Zusammensetzung nach einem der Ansprüche 1 bis 15, welches das Bilden einer Emulsion einer wässerigen Lösung aus Protein, der reduzierenden Substanz und gegebenenfalls wasserlöslichen Hilfsmitteln mit dem Carotenoid und/oder fettlöslichen Vitamin, dem festen Pflanzenfett und gegebenenfalls fettlöslichen Hilfsmitteln, das Umwandeln der Emulsion in eine Trockenteilchenform und das Unterziehen der Teilchen Bedingungen, die das Vernetzen des Proteins und der reduzierenden Substanz bewirken, umfaßt.

17. Verwendung einer Zusammensetzung nach einem der Ansprüche 1 bis 15 als ein Additiv für Lebensmittel.

18. Verwendung nach Anspruch 17, wobei das Lebensmittel ein Pflanzenfett ist.

19. Verwendung nach Anspruch 17, wobei das Lebensmittel Margarine ist.

20. Lebensmittel, enthaltend eine Zusammensetzung nach einem der Ansprüche 1 bis 15.

21. Pflanzenfett, enthaltend eine Zusammensetzung nach einem der Ansprüche 1 bis 15.

22. Margarine, enthaltend eine Zusammensetzung nach einem der Ansprüche 1 bis 15.

## Revendications

1. Compositions comprenant un caroténoïde et/ou une vitamine liposoluble dans une matrice d'une protéine qui est réticulée avec une substance réductrice, une graisse végétale solide et, optionnellement, des agents auxiliaires.

2. Compositions comprenant un caroténoïde dans une matrice d'une protéine qui est réticulée avec une substance réductrice, une graisse végétale solide et, optionnellement, des agents auxiliaires.

3. Compositions comme dans la revendication 1 ou 2, dans lesquelles la protéine est la gélatine.

4. Compositions comme dans l'une quelconque des revendications 1-3, dans lesquelles la substance réductrice est un sucre réducteur.

5. Compositions comme dans l'une quelconque des revendications 1-4, dans lesquelles la matrice comprend environ 5 à environ 80 % pds de protéine, environ 5 à environ 50 % pds d'une substance réductrice, et environ 2 à environ 30 % d'une graisse végétale solide.

6. Compositions comme dans l'une quelconque des revendications 1-5, dans lesquelles la matrice comprend environ 10 à environ 40 % pds de protéine, environ 10 à environ 35 % pds d'une substance réductrice, et environ 5 à environ 20 % d'une graisse végétale solide.

7. Compositions comme dans l'une quelconque des revendications 1-6, comprenant environ 0,1 à environ 30 % pds d'un caroténoïde et/ou d'une vitamine liposoluble.

8. Compositions comme dans l'une quelconque des revendications 1-6, comprenant environ 1 à environ 10 % pds d'un caroténoïde et/ou d'une vitamine liposoluble.

9. Compositions comme dans l'une quelconque des revendications 1-8, dans lesquelles le caroténoïde est l'α-ou le β-carotène, le 8'-apo-β-caroténal, des esters d'acide 8'-apo-β-caroténoïque, tels que l'ester éthylique, la canthaxanthine, l'astaxanthine, le lycopène, la lutéine, la zéaxanthine ou la crocétine, ou leurs mélanges.

10. Compositions comme dans l'une quelconque des revendications 1-9, dans lesquelles le caroténoïde est le β-carotène, la lutéine ou le lycopène, ou leurs mélanges.

11. Compositions comme dans l'une quelconque des revendications 1-10, dans lesquelles le caroténoïde est le β-carotène.

12. Compositions comme dans l'une quelconque des revendications 1-10, dans lesquelles le caroténoïde est un mélange de lycopène et de lutéine.

13. Compositions comme dans l'une quelconque des revendications 1-12, dans lesquelles la graisse végétale est une matière grasse de tournesol ou de l'huile de colza durcie.

14. Compositions comme dans l'une quelconque des revendications 1-12, dans lesquelles le glycérol est présent comme agent auxiliaire.

15. Compositions comme dans la revendication 1, dans lesquelles la vitamine liposoluble est la vitamine A, D, E ou K ou leurs mélanges.

16. Procédé pour préparer une composition telle que revendiquée dans l'une quelconque des revendications 1-15 qui comprend la formation d'une émulsion d'une solution aqueuse de la protéine, de la substance réductrice et d'agents auxiliaires hydrosolubles optionnels avec le caroténoïde et/ou la vitamine liposoluble, la graisse végétale solide et des agents auxiliaires liposolubles optionnels, la conversion de l'émulsion en une forme particulaire sèche et la soumission des particules à des conditions permettant d'effectuer une réticulation de la protéine et de la substance réductrice.

17. Utilisation d'une composition telle que revendiquée dans l'une quelconque des revendications 1-15 comme additif pour aliment.

18. Utilisation comme dans la revendication 17, dans laquelle l'aliment est une graisse végétale.

19. Utilisation comme dans la revendication 17, dans laquelle l'aliment est une margarine.

20. Aliment contenant une composition telle que revendiquée dans l'une quelconque des revendications 1-15.

21. Graisse végétale contenant une composition telle que revendiquée dans l'une quelconque des revendications 1-15.

22. Margarine contenant une composition telle que revendiquée dans l'une quelconque des revendications 1-15.
